# EUROPEAN PATENT APPLICATION

(11) **EP 4 224 656 A1**
(43) Date of publication of application: **09.08.2023**
(21) Application number: 23155004.7
(22) Date of filing: 03.02.2023
(51) Int. Cl.: H02J 3/14

(54) **METHOD AND ENERGY MANAGEMENT SYSTEM FOR PREVENTING HIGH ENERGY USAGE PEAKS**

(30) Priority: 04.02.2022 BE 202205073
(71) Applicant: Niko NV, 9100 Sint-Niklaas (BE)
(72) Inventor: VERBIEST, Nele, 9100 Sint-Niklaas (BE); DE BOCK, Yannick, 9120 Beveren (BE); GOEMAERE, Geert, 2900 Schoten (BE); VAN REMORTEL, Bart, 4576CW Koewacht (NL)
(74) Representative: Winger

(57) **Abstract**

The present inventio provides a method for preventing high energy usage peaks when using electric or electronic appliances. The method comprises defining a predefined energy usage peak threshold (E_{TH}), monitoring energy usage (E) of the electric or electronic appliances during consecutive time frames (TF) with a start time (T_{S}) and an end time (T_{E}), evaluating the monitored energy usage (E) at predetermined time points (T_{E1}, T_{E2}, ...) during a time period (TP) within the time frame (TF), predicting whether, from the evaluation during the time period (TP), the energy usage (E) will exceed the predefined energy use peak threshold (E_{TH}) at the end time (T_{E}) of the time frame (TF), and when it is predicted that energy usage (E) will exceed the predefined energy usage peak threshold (E_{TH}) at the end time (T_{E}) of the time frame (TF), switching off a first electric or electronic appliance. The present invention also provides an energy management system for preventing high energy usage peaks when using electric or electronic appliances.

## Description

### Technical field of the invention

The present invention relates to a method and an energy management system for preventing high energy usage peaks and to an energy management system.

### Background of the invention

Due to the efforts to limit CO₂ emissions, there has been an energy transition going on during the last decades. Decentral wind and solar electricity production are slowly taking over central nuclear, gas and coal-fired electricity production. At the same time, there is an electrification of the society. That is, more and more houses, cars and appliances are relying on electricity rather than on gas or fuel.

This energy transition comes with new challenges. One of the main challenges is to better align electricity consumption and production by avoiding peaks in electricity consumption or production, as these can overload the power grid. This can be tackled in many ways, such as e.g. by introducing the so-called capacity rate and withdrawing the bi-directional meter, as is used in some countries at the moment. Consumers will be encouraged to increase self-consumption and to avoid peaks in their electricity usage.

In some countries, the network charges will in the future mainly be based on the peak usage of a customer. For example, for every predefined period, the electricity consumption will be calculated. Each month, the predefined period with the highest average consumption will be considered as the peak usage. The yearly network charges will then be based on the average peak usage of the last 12 months. The peak usage will be communicated to the customer and will be clearly displayed on the yearly invoice.

US 11,144,021 discloses a computer-implemented method for recommending one or more control schemes for controlling peak loading conditions and abrupt changes in energy pricing of one or more built environments associated with renewable energy sources. The computer-implemented method includes collection of a first set of statistical data including current power consumption and past power consumption of a plurality of energy consuming appliances, fetching of a second set of statistical data including an energy consumption behavior of each of a plurality of users and an occupancy pattern of the plurality of users present inside the one or more built environments based on occupancy sensors, accumulation of a third set of statistical data including current and historical energy storage and supply capacity data of a plurality of energy storage and supply means of the one or more built environments including charging rates, discharging rates, temperature characteristics, energy storage and release capacity of the plurality of energy storage and supply means, reception of a fourth set of statistical data including current and historical temperature data inside and outside of the one or more built environments and gathering of fifth set of statistical data including current and historical recordings of energy pricing models affecting power consumption of the one or more built environment. Further, the computer-implemented method includes analysis of the first set of statistical data, the second set of statistical data, the third set of statistical data, the fourth set of statistical data and the fifth set of statistical data. In addition, the computer-implemented method includes recommendation of one or more control schemes to a plurality of energy consuming appliances and a plurality of energy storage and supply means.

### Summary of the invention

It is an object of embodiments of the present invention to provide a method and an energy management system for preventing high energy usage peaks.

The above objective is accomplished by a method and device according to embodiments of the present invention.

The present invention provides a method for preventing high energy usage peaks when using electric or electronic appliances. The method comprises defining a predefined energy usage peak threshold, monitoring energy usage of the electric or electronic appliances during consecutive time frames with a start time and an end time. The time frame may, for example, be a quarter of an hour, half an hour, an hour, or whatever time period a user may want to use. The method further comprises evaluating, at predetermined time points, e.g. every minute, or every 2 minutes, ..., during consecutive time periods within the time frame, From the evaluation of the energy usage during the time period, it is predicted whether the energy usage will exceed the predefined energy use peak threshold at the end time of the time frame. When it is predicted that energy usage will exceed the predefined energy usage peak threshold at the end time of the time frame, a first electric or electronic appliance will be switched off.

Examples of electric or electronic appliances that can be switched off may be but are not limited to a boiler, a car charger, a heat pump, switches (for chargeable appliances, e.g. smartphone, vacuum cleaner, ... ), an electrical heating or cooling, a home battery or the like.

The method according to embodiments of the invention is based on real-time historical energy usage data, and monitoring is done frequently, so that whenever it is expected that the energy peak threshold will be exceeded, action is taken very quickly to switch off at least one electric or electronic appliance, such that energy usage peaks are prevented from being too high, such that energy invoices are being kept as low as possible.

According to embodiments of the invention, the method may furthermore comprise making a priority list of electric or electronic appliances that can be switched off, wherein electric or electronic appliances that may be switched off first are at the top of the list, and switching off at least one electric or electronic appliance is done by switching off the at least one electric or electronic appliance according to the priority list.

An advantage hereof is that it provides a high comfort for end customers, as they can, while , decide which electric or electronic appliances may be switched off or not and which electric or electronic appliances may be switched off first, because they can determine themselves in which order electric or electronic appliances are switched off.

When it is decided that, in a subsequent time frame after switching off a first electric or electronic appliance, that the energy usage will still exceed the predefined energy usage peak threshold at the end time of that time frame, a further electric or electronic appliance may be switched off.

The method may, according to embodiments of the invention, further comprise, when it is predicted that the energy usage will no longer exceed the predefined energy usage peak threshold at the end time of the time frame, deciding to switch back on at least one electric or electronic appliance.

According to embodiments of the invention predicting whether, from the evaluation during the time period, the energy usage will exceed the predefined energy usage peak threshold at the end time of the time frame may comprise determining a threshold value for the time over which the energy usage may exceed the energy usage peak threshold, detecting when the energy usage exceeds the energy usage peak threshold, determining the time period over which the energy usage exceeds the energy usage peak threshold, and when the time period over which the energy usage exceeds the threshold value for the time over which the energy usage may exceed the energy usage peak threshold, predicting that the energy usage will exceed the predefined energy usage peak threshold at the end time of the time frame.

According to embodiments of the invention, the threshold value for the time over which the energy usage may exceed the energy usage peak threshold may depend on the degree of comfort required for a user. For example, for switching off at least one electric or electronic appliance, the certain time period may, for example, be between 0 and 120 seconds, depending on the degree of comfort a user requires.

According to embodiments of the invention, deciding to switch back on at least one electric or electronic appliance may be done when the energy usage is lower than 70% of the energy usage peak threshold for a certain time period.

For switching back on at least one electric or electronic appliance, the certain time period may, for example, be between 10 and 300 seconds.

According to further embodiments, predicting whether, from the evaluation during the time period, the energy usage will exceed the predefined energy usage peak threshold at the end time of the time frame may comprise, before starting evaluation during the time period, monitoring energy usage for a historical time period, for example, a time period of 3 months, or 6 months, or any other suitable time period, from the monitored energy usage in the historical time period, constructing a base table, whereby each line in the base table represents a time point at which energy usage was monitored during the historical time period, and wherein at least an average energy usage is listed, train a linear regression model based on the base table, applying the linear regression model on energy usage in the time period in order to determine an average energy usage at the end time of the time frame, and predicting whether the energy usage peak threshold will be exceeded at the end time of the time frame.

According to further embodiments, deciding to switch back on at least one electric or electronic appliance may be done when the estimated average energy usage is lower than 70% of the energy usage peak threshold.

According to still further embodiments, deciding whether, from the evaluation during the time period, the energy usage will exceed the predefined energy usage peak threshold at the end time of the time frame may comprise determining an average energy usage within the time period, determining whether the average energy usage exceeds the predetermined energy usage peak threshold, and when the average energy usage within the time period exceeds the predetermined energy usage peak threshold, predicting that the energy usage will exceed the predefined energy usage peak threshold at the end time of the time frame.

Deciding to switch back on at least one electric or electronic appliance may, according to embodiments, comprise evaluating whether the average energy usage of the electric or electronic appliances that are switched off summed with the average energy usage of an electric or electronic appliance to be switched on is lower than the energy usage peak threshold, and when the average energy usage of the electric or electronic appliances that are switched off summed with the average energy usage of an electric or electronic appliance to be switched on is lower than the energy usage peak threshold, decide to switch on an electric or electronic appliance.

The present invention also provides an energy management system for preventing high energy usage peaks when using electric or electronic appliances. The energy management system comprises a gateway for controlling the electric or electronic appliances, a digital meter for monitoring energy usage of the electric or electronic appliances during consecutive time frames with a start time and an end time, means for continuously evaluating the monitored energy usage at predetermined time points during a time period within the time frame, and means for predicting whether, from the continuous evaluation during the time period, the energy usage will exceed the predefined energy use peak threshold at the end time of the time frame. The digital meter is adapted to, when it is predicted that the energy usage will exceed the predefined energy usage peak threshold at the end time of the time frame, send a signal to the gateway for switching off at least one electric or electronic appliance.

According to embodiments of the invention, the digital meter may further be adapted to send a signal to the gateway for turning on at least one electric or electronic appliance.

According to still further embodiments of the invention, the energy management system may further comprise at least one smart plug for switching the at least one electric or electronic appliance on or off upon receiving a signal from the gateway.

### Brief description of the drawings

It has to be noted that same reference signs in the different figures refer to same, similar or analogous elements.
Fig. 1 schematically illustrates a method according to embodiments of the invention.
Fig. 2 schematically illustrates a method according to embodiments of the invention.
Fig. 3 schematically illustrates a method according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides a method and a device for preventing high energy usage peaks when using electric or electric devices.

The method according to embodiments of the invention comprises in a first step defining a predefined energy usage peak threshold. The method further comprises monitoring energy usage of the electric or electronic appliances during consecutive time frames with a start time and an end time. The time frame may, for example, be a quarter of an hour, half an hour, an hour, or whatever time period a user may want to use. During the monitoring, the energy usage is continuously evaluated at predetermined time points, e.g. every minute, or every 2 minutes, ... during a predefined time period within the time frame. From the continuous evaluation during the time period it is then predicted whether the energy usage will exceed the predefined energy use peak threshold at the end time of the time frame. When it is predicted that this is the case, the method further comprises switching off at least one electric or electronic appliance. If it is predicted that this will not be the case, monitoring is continued and a same process is repeated in a new subsequent time frame.

Examples of electric or electronic appliances that can be switched off may be but are not limited to a boiler, a car charger, a heat pump, switches (for chargeable appliances, e.g. smartphone, vacuum cleaner, ... ), an electrical heating or cooling, a home battery or the like.

The method according to embodiments of the invention is based on real-time historical energy usage data, and monitoring is done frequently, so that whenever it is expected that the energy peak threshold will be exceeded, action is taken very quickly to switch off at least one electric or electronic appliance, such that energy usage peaks are prevented from being too high, such that energy invoices are being kept as low as possible.

A method according to embodiments of the invention will thus help users to keep their energy peak usage low by switching off appliances when the energy usage within a current time frame, e.g. a time frame of 15 minutes, 30 minutes, or the like, is likely to exceed a predefined energy usage peak threshold, which may be determined by the user him- or herself.

The present invention will hereinafter be described by means of different embodiments. It has to be understood that these embodiments are only for the ease of understanding the invention and are not intended to limit the invention in any way.

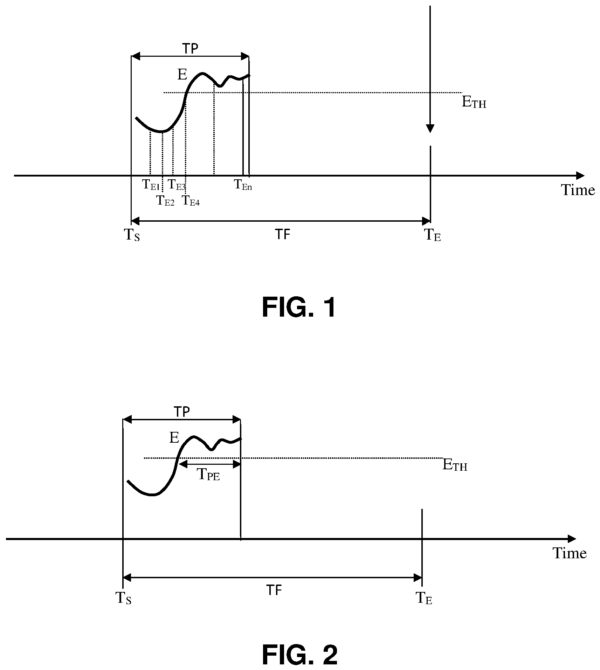

Fig. 1 schematically illustrates a method for preventing high energy usage peaks when using electric or electronic appliances according to embodiments of the invention. Users define an energy usage peak threshold E_{TH} for their energy usage E. This means that they do not want to have energy usage peaks significantly higher than the threshold E_{TH} they define. Once this threshold E_{TH} is set, e.g. in a gateway of an energy management system, the energy usage E is monitored by means of a digital meter. According to the invention, this is done during consecutive time frames TF. The time frames TF are defined by a start time T_{S} and an end time T_{E}. The time frame TF may, for example, be a quarter of an hour, half an hour, an hour, or whatever time period a user may want to use. The higher this time frame TF is, the less accurate the method will be, in other words, the more likely it is that high energy usage peaks are reached, before electric or electronic appliances are switched off. Therefore, preferably, the time frame TF may be 15 minutes. The measured energy usage is continuously evaluated at predetermined time points T_{E1}, T_{E2}, ... T_{EN} during a time period TP within the time frame TF.

This is done to see whether there is a chance that the energy usage E will exceed the predefined energy usage peak threshold E_{TH} at the end time T_{E} of the time frame TF. When, after the time period TP it is predicted, as a result of the continuous evaluation, that at the end time T_{E} of the time frame TF energy usage E will exceed the predefined energy usage peak threshold E_{TH} at least one electric or electronic appliance may be switched off.

According to embodiments of the invention, a priority list may be set up of electric or electronic appliances that can be switched off. In that priority list, a user can decide which electric or electronic appliance he or she wants to switch off first, when this would be required because of a too high energy usage at that time. Hence, a user can put the electric or electronic appliances that he or she wants to have switched off first on top of the list. So, when it is decided by the energy management system that the energy usage E will exceed the predefined energy usage peak threshold, the electric or electronic appliance that is first on the list, will then be switched off first by the energy management system.

An advantage hereof is that it provides a high comfort for end customers, as they can, while keeping an eye on their energy usage, still decide which electric or electronic appliances may be switched off or not and which electric or electronic appliances may be switched off first, because they can determine themselves in which order electric or electronic appliances are switched off.

Examples of appliances that may be switched off may be but are not limited to a boiler, a car charger, a heat pump, switches (for chargeable appliances, e.g. smartphone, vacuum cleaner, ... ), an electrical heating or cooling, a home battery or the like.

The energy usage E is further monitored and evaluated as described above, even after an electric or electronic appliance was switched off. If it is then predicted that, in a subsequent time frame TF, the energy usage E will still exceed the predefined energy usage peak threshold E_{TH}, a further electric or electronic appliance can be switched off. Further electric or electronic appliances may be switched off until there is no longer a prediction that the energy usage E will exceed the predefined energy usage peak threshold E_{TH}. For determining the sequence of electric or electronic appliances to be switched off, the energy management system will follow the priority list set up by the user.

When in still a further subsequent time frame TF it is predicted that the energy usage E will no longer exceed the predefined energy usage peak threshold E_{TH} at the end time T_{E} of the time frame TF, at least one electric or electronic appliance may be switched back on. The sequence for switching back on electric or electronic appliances may then be the opposite sequence as the priority list, i.e. the first electric or electronic appliance to be switched back on may be the last one on the list that was switched off.

Different methods may be used to predict if there is a chance that the energy usage E will exceed the predefined energy usage peak threshold E_{TH} at the end time T_{E} of the time frame TF. Depending on the method used for deciding to switch off electric or electronic appliances, the method for deciding to switch back on electric or electronic appliances may also be different. Fig. 2 illustrates a first way to predict if there is a chance that the energy usage E will exceed the predefined energy usage peak threshold E_{TH} at the end time T_{E} of the time frame TF. According to this method, which may be referred to as baseline method, it is expected that the energy usage E will exceed the energy usage peak threshold E_{TH} if the energy usage E exceeds the energy usage peak threshold E_{TH} for a certain time during the time period TP. Therefore, according to the present embodiment, deciding whether, from the continuous evaluation during the time period TP, that the energy usage E will exceed the predefined energy usage peak threshold E_{TH} at the end time T_{E} of the time frame TF may be done as follows. First, a threshold value may be defined for indicating the maximum time period over which the energy usage E may exceed the energy usage peak threshold E_{TH}. Again, this is a decision a user has to take and to set up before using the energy management system. When it is then, during monitoring of the energy usage E and the continuously evaluating at predetermined time points T_{E1}, T_{E2}, ... T_{EN}, it is predicted that the energy usage E will exceed the energy usage peak threshold E_{TH}, the time period TP_{E} over which the energy usage E exceeds the energy usage peak threshold E_{TH}, has to be monitored and determined. When the time period TP_{PE} over which the energy usage E exceeds the energy usage peak threshold E_{TH} exceeds the predefined threshold value, then it can be predicted that there is a high chance that the energy usage E will exceed the predefined energy usage peak threshold E_{TH} at the end time T_{E} of the time frame TF.

The magnitude of the threshold value may depend on the degree of comfort versus the degree of safety. In the context of the invention, with comfort is meant that a user is not confronted with electric or electronic appliances switching on and off all the time. When the comfort is high, the method according to the present embodiment will be less accurate and the energy invoice will only slightly be lowered, although too high increases of the energy invoice will still be prevented. On the other hand, when the comfort is lower, the method according to the present embodiment will be more accurate, i.e. the energy invoice will be lowered significantly. In the context of the invention, with safety is meant that a user can be sure of the accuracy of the method for preventing the energy usage peaks from being too high and thus to save on the energy invoice. The higher the safety level is chosen, the more accurate the method according to the present embodiment will be.

For example, when a user wants to be sure of high accuracy of the method for preventing the energy usage peak from being too high, the user may choose for a "very safe" mode. In this case, the threshold value may, for example, be between 0 seconds and 2 seconds. This means that, when the time period TP_{E} over which the energy usage E exceeds the energy usage peak threshold E_{TH} is higher than the threshold value for the time over which the energy usage E may exceed the energy usage peak threshold E_{TH} over a period of between 0 seconds and 2 seconds, it will be decided that there is a danger that energy usage E will exceed the predefined energy use peak threshold E_{TH} at the end time T_{E} of the time frame TF. This means that, as soon as the time period TP_{E} over which the energy usage E exceeds the energy usage peak threshold E_{TH} is higher than the threshold value for the time over which the energy usage E may exceed the energy usage peak threshold E_{TH}, at least one electric or electronic appliance will be switched off.

When a user wants to choose a "safe" mode, the threshold value for the time over which the energy usage E may exceed the energy usage peak threshold E_{TH} may, for example, be chosen to be between 8 seconds and 15 seconds, for example 10 seconds. In this case, when the time period TP_{E} over which the energy usage E exceeds the energy usage peak threshold E_{TH} is higher than the threshold value for the time over which the energy usage E may exceed the energy usage peak threshold E_{TH} over a period of between 8 seconds and 15 seconds, it will be decided that there is a danger that energy usage E will exceed the predefined energy use peak threshold E_{TH} at the end time T_{E} of the time frame TF and at least one electric or electronic appliance will be switched off.

A user may also want to have more comfort. Then, he or she can choose a "moderate" mode. In this "moderate" mode the threshold value for the time over which the energy usage E may exceed the energy usage peak threshold E_{TH} may, for example, be chosen to be between 50 seconds and 70 seconds, for example 60 seconds. In this case, when the time period TP_{E} over which the energy usage E exceeds the energy usage peak threshold E_{TH} is higher than the threshold value for the time over which the energy usage E may exceed the energy usage peak threshold E_{TH} over a period of between 50 seconds and 70 seconds, it will be decided that there is a danger that energy usage E will exceed the predefined energy use peak threshold E_{TH} at the end time T_{E} of the time frame TF and at least one electric or electronic appliance will be switched off.

If a user chooses to have maximum comfort, he or she may choose a "comfort" mode. In this "comfort" mode the threshold value for the time over which the energy usage E may exceed the energy usage peak threshold E_{TH} may, for example, be chosen to be between 100 seconds and 140 seconds, for example 120 seconds. In this case, when the time period TP_{E} over which the energy usage E exceeds the energy usage peak threshold E_{TH} is higher than the threshold value for the time over which the energy usage E may exceed the energy usage peak threshold E_{TH} over a period of between 100 seconds and 140 seconds, it will be predicted that there is a high chance that the energy usage E will exceed the predefined energy use peak threshold E_{TH} at the end time T_{E} of the time frame TF and at least one electric or electronic appliance will be switched off.

Hence, from the above it is clear that the higher the required comfort, the higher the threshold value for the time over which the energy usage E may exceed the energy usage peak threshold E_{TH} should be chosen.

According to embodiments of the invention, as already described above, when it is, in a subsequent time frame TF, predicted that the energy usage E will no longer exceed the predefined energy usage peak threshold E_{TH} at the end time T_{E} of the time frame TF, it may be decided to switch back on at least one electric or electronic appliance. According to the present embodiment, predicting that the energy usage E will no longer exceed the predefined energy usage peak threshold E_{TH} at the end time T_{E} of the time frame TF may be done when the energy usage E is lower than 70% of the energy usage peak threshold E_{TH} for a certain time. According to the present embodiment and thus according to the baseline method, the certain time may again depend on the degree of comfort that a user requires.

In the "very safe" mode, it will be predicted that the energy usage E will no longer exceed the predefined energy usage peak threshold E_{TH} at the end time T_{E} of the time frame TF when the energy usage E is lower than 70% of the energy usage peak threshold E_{TH} for a period of between 250 seconds and 350 seconds, for example 300 seconds.

In the "safe" mode, it will be decided that the energy usage E will no longer exceed the predefined energy usage peak threshold E_{TH} at the end time T_{E} of the time frame TF when the energy usage E is lower than 70% of the energy usage peak threshold E_{TH} for a period of between 100 seconds and 140 seconds, for example 120 seconds.

In the "moderate" mode, it will be that the energy usage E will no longer exceed the predefined energy usage peak threshold E_{TH} at the end time T_{E} of the time frame TF when the energy usage E is lower than 70% of the energy usage peak threshold E_{TH} for a period of between 40 seconds and 80 seconds, for example 60 seconds.

In the "comfort" mode, it will be predicted that the energy usage E will no longer exceed the predefined energy usage peak threshold E_{TH} at the end time T_{E} of the time frame TF when the energy usage E is lower than 70% of the energy usage peak threshold E_{TH} for a period of between 5 seconds and 15 seconds, for example 10 seconds.

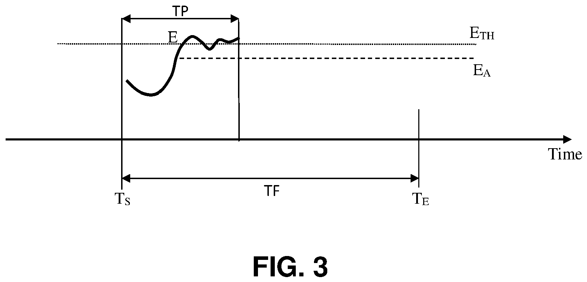

Fig. 3 illustrates a second way to predict if there is a chance that energy usage E will exceed the predefined energy usage peak threshold E_{TH} at the end time T_{E} of the time frame TF. According to this method, which may be referred to as inference method, the decision whether the energy usage E will exceed the energy usage peak threshold E_{TH} at T_{E} of the time frame TF is based on an inference method in which the philosophy is to project the monitored average energy usage E_{A} in the time period TP for the remainder of the time frame TF.

The method according to this embodiment comprises in a first step determining the average energy usage E_{A} for the time period TP. This average energy usage E_{A} is then projected to be the energy usage E for the remainder of the time frame TF. It is then determined whether the average energy usage E_{A} exceeds the predetermined energy usage peak threshold E_{TH}. If this is the case, thus if the average energy usage E_{A} within the time period TP exceeds the predetermined energy usage peak threshold E_{TH}, it is predicted that the energy usage E will exceed the predefined energy usage peak threshold E_{TH} at the end time T_{E} of the time frame TF, and at least one electric or electronic appliance will be switched off.

According to embodiments of the invention, choosing which electric or electronic appliance to switch off may be done based on the average energy usage of the electric or electronic appliances. Therefore, a list may be set up and stored of electric and electric appliances sorted according to their average energy usage. The electric or electronic appliance to be switched off will be chosen so that, after switching off, the expected total average energy usage E_{A} minus the total average energy usage of the remaining electric or electronic appliances is below the energy usage peak threshold.

Hence, from the above it is clear that the inference method estimates the average energy usage E_{A} at the end of time frame TF by assuming that the average energy usage over the time period TP will be maintained.

According to embodiments of the invention, as already described above, when it is, in a subsequent time frame TF, decided that the energy usage E will no longer exceed the predefined energy usage peak threshold E_{TH} at the end time T_{E} of the time frame TF, it may be decided to switch back on at least one electric or electronic appliance. According to the present embodiment, deciding that the energy usage E will no longer exceed the predefined energy usage peak threshold E_{TH} at the end time T_{E} of the time frame TF may be done as follows. At each point in time, it is evaluated whether the average energy usage of the electric or electronic appliances that are switched off summed with this expected average energy usage of the electric or electronic appliance to be switched on is lower than the energy usage peak threshold E_{TH}. As long is this is the case, as many electric or electronic appliances as possible may be switched on without the average energy usage E_{A} of all electric or electronic appliances that are switched on exceeding the energy usage peak threshold E_{TH}.

According to further embodiments, there is still a third way to predict that the energy usage E will exceed the predefined energy usage peak threshold E_{TH} at the end time T_{E} of the time frame TF. According to this method, which may be referred to as linear regression method, predicting if the energy usage E will exceed the predefined energy usage peak threshold E_{TH} at the end time T_{E} of the time frame TF may be based on the use of artificial intelligence to predict whether the energy usage peak threshold E_{TH} will be exceeded.

Therefore, a time period of energy usage is considered, for example three months, and for that time period a base table is constructed. Each row in the base table represents a time point in this time period in which energy usage was considered. This base table may comprise energy features like average energy consumption during the last hour, last two hours, last quarter of an hour, trends and so on.

A linear regression model may be trained on this base table. This linear regression may then be used at each point in time T_{E1}, T_{E2}, ..., T_{EN} of the time period TP, in order to predict whether the energy usage peak threshold E_{TH} will be exceeded at T_{E} of the time frame TP. If it is predicted that the energy usage peak threshold E_{TH} will be exceeded at T_{E} of the time frame TP, a first electric or electronic appliance may be switched off.

According to embodiments of the invention, as already described above, when it is, in a subsequent time frame TF, predicted that the energy usage E will no longer exceed the predefined energy usage peak threshold E_{TH} at the end time T_{E} of the time frame TF, it may be decided to switch back on at least one electric or electronic appliance. According to the present embodiment, predicting that the energy usage E will no longer exceed the predefined energy usage peak threshold E_{TH} at the end time T_{E} of the time frame TF may be done as follows. At each point in time, the linear regression method estimates the energy consumption at the end of the time frame TF based on the trained model and applies that by using linear regression based on the energy usage data of the time period TP. If this estimated average energy usage is lower than 70% of the energy usage peak threshold, an electric or electronic appliance will be switched on.

The present invention also provides an energy management system for preventing high energy usage peaks when using electric or electronic appliances. The energy management system comprises a gateway for controlling the electric or electronic appliances, a digital meter for monitoring energy usage E of the electric or electronic appliances during consecutive time frames TF with a start time Ts and an end time T_{E}. The energy management system further comprises means for continuously evaluating the monitored energy usage E, at predetermined time points T_{E1}, T_{E2}, ..., T_{EN} during a time period TP within the time frame TF, and means for predicting whether, from the continuous evaluation during the time period TPthe energy usage E will exceed the predefined energy use peak threshold E_{TH} at the end time T_{E} of the time frame TF. The digital meter is adapted to, when it is predicted that energy usage E will exceed the predefined energy usage peak threshold E_{TH} at the end time T_{E} of the time frame TF, send a signal to the gateway for switching off at least one electric or electronic appliance.

According to embodiments of the invention, the digital meter may further be adapted to send a signal to the gateway for turning on at least one electric or electronic appliance.

According to further embodiments, the energy management system may further comprise at least one smart plug for switching the at least one electric or electronic appliance on or off upon receiving a signal from the gateway.

## Claims

1. A method for preventing high energy usage peaks when using electric or electronic appliances, the method comprising:
- defining a predefined energy usage peak threshold (E_{TH}),
- monitoring energy usage (E) of the electric or electronic appliances during consecutive time frames (TF) with a start time (Ts) and an end time (T_{E}),
- evaluating the monitored energy usage and predicting, at predetermined time points (T_{E1}, T_{E2}, ...) during consecutive time periods (TP) within the time frame (TF), whether the energy usage (E) will exceed the predefined energy use peak threshold (E_{TH}) at the end time (T_{E}) of the time frame (TF), and
- when it is predicted that energy usage (E) will exceed the predefined energy usage peak threshold (E_{TH}) at the end time (T_{E}) of the time frame (TF), switching off a first electric or electronic appliance.

2. A method according to claim 1, further comprising:
- making a priority list of electric or electronic appliances that can be switched off, wherein electric or electronic appliances that may be switched off first are at the top of the list,
and wherein switching off at least one electric or electronic appliance is done by switching off the at least one electric or electronic appliance according to the priority list.

3. A method according to claim 1 or 2, further comprising, when it is decided that, in a subsequent time frame (TF) after switching off a first electric or electronic appliance, the energy usage (E) will still exceed the predefined energy usage peak threshold (E_{TH}) at the end time (T_{E}) of that time frame (TF), switching off a further electric or electronic appliance.

4. A method according to any of claims 1 to 3, further comprising, when the energy usage (E) will no longer exceed the predefined energy usage peak threshold (ETH) at the end time (TE) of the time frame (TF), deciding to switch back on at least one electric or electronic appliance.

5. A method according to any of claims 1 to 4, wherein predicting whether, from the evaluation during the time period (TP), that the energy usage (E) will exceed the predefined energy usage peak threshold (E_{TH}) at the end time (T_{E}) of the time frame (TF) comprises:
- determining a threshold value (T_{TH}) for the time over which the energy usage (E) may exceed the energy usage peak threshold (E_{TH}),
- detecting when the energy usage (E) exceeds the energy usage peak threshold (E_{TH}),
- determining the time period (TP_{E}) over which the energy usage (E) exceeds the energy usage peak threshold (E_{TH}), and
- when the time period (TP_{E}) over which the energy usage (E) exceeds the threshold value for the time over which the energy usage (E) may exceed the energy usage peak threshold (E_{TH}), predicting that the energy usage (E) will exceed the predefined energy usage peak threshold (E_{TH}) at the end time (T_{E}) of the time frame (TF).

6. A method according to claim 5, wherein the threshold value for the time (T_{TH})over which the energy usage (E) may exceed the energy usage peak threshold (E_{TH}) depends on the degree of comfort required by a user.

7. A method according to claim 5 or 6 when depending on claim 4, wherein deciding to switch back on at least one electric or electronic appliance is done when the energy usage (E) is lower than 70% of the energy usage peak threshold (ETH) for a certain time period.

8. A method according to any of claims 1 to 4, wherein predicting whether, from the evaluation during the time period (TP), the energy usage (E) will exceed the predefined energy usage peak threshold (E_{TH}) at the end time (T_{E}) of the time frame (TF) comprises:
- before starting evaluation during the time period (TP) monitoring energy usage (E) for a historical time period,
- from the monitored energy usage (E) in the historical time period, constructing a base table, whereby each line in the base table represents a time point at which energy usage (E) was monitored during the historical time period, and wherein at least an average energy usage limit (E_{A}) for a time period (T_{P}) is listed,
- train a linear regression model based on the base table,
- applying the linear regression model on the energy usage (E) in the time period (TP) in order to determine an average energy usage at the end time (T_{E}) of the time frame (TP), and
- if the average energy usage at the end time (TE) of the time frame (TP) exceeds the average energy usage limit (EA) predicting that the energy usage peak threshold (E_{TH}) will be exceeded at the end time (T_{E}) of the time frame (TP).

9. A method according to claim 8 when depending on claim 4, wherein deciding to switch back on at least one electric or electronic appliance is done when the estimated average energy usage is lower than 70% of the energy usage peak threshold

10. A method according to any of claims 1 to 4, wherein predicting whether, from the evaluation during the time period (TP), the energy usage (E) will exceed the predefined energy usage peak threshold (E_{TH}) at the end time (T_{E}) of the time frame (TF) comprises:
- determining an average energy usage (E_{A}) within the time period (TP),
- determining whether the average energy usage (E_{A}) exceeds the predetermined energy usage peak threshold (E_{TH}), and
- when the average energy usage (E_{A}) within the time period (TP) exceeds the predetermined energy usage peak threshold (E_{TH}), predicting that energy usage (E) will exceed the predefined energy usage peak threshold (E_{TH}) at the end time (T_{E}) of the time frame (TF).

11. A method according to claim 10 when depending on claim 4, wherein deciding to switch back on at least one electric or electronic appliance comprises:
- evaluating whether the average energy usage (E_{A}) of the electric or electronic appliances that are switched off summed with the average energy usage of an electric or electronic appliance to be switched on is lower than the energy usage peak threshold (E_{TH}), and
- when the average energy usage (E_{A}) of the electric or electronic appliances that are switched off summed with the average energy usage of an electric or electronic appliance to be switched on is lower than the energy usage peak threshold (E_{TH}), decide to switch on an electric or electronic appliance.

12. Energy management system for preventing high energy usage peaks when using electric or electronic appliances, the energy management system comprising:
- a gateway for controlling the electric or electronic appliances,
- a digital meter for monitoring energy usage (E) of the electric or electronic appliances during consecutive time frames (TF) with a start time (T_{S}) and an end time (T_{E}),
- means for evaluating the monitored energy usage (E) at predetermined time points (T_{E1}, T_{E2}, ...) during a time period (TP) within the time frame (TF), and
- means for deciding whether, from the evaluation during the time period (TP), the energy usage (E) will exceed the predefined energy use peak threshold (E_{TH}) at the end time (T_{E}) of the time frame (TF),
wherein the digital meter is adapted to, when the energy usage (E) will exceed the predefined energy usage peak threshold (ETH) at the end time (TE) of the time frame (TF), send a signal to the gateway for switching off at least one electric or electronic appliance.

13. Energy management system according to claim 12, wherein the digital meter is further adapted to send a signal to the gateway for turning on at least one electric or electronic appliance.

14. Energy management according to 12 or 13, further comprising at least one smart plug for switching the at least one electric or electronic appliance on or off upon receiving a signal from the gateway.
